Europäisches Patentamt

(19) European Patent Office

Office européen des brevets

(11) Numéro de publication: **0 197 020**

**A1**

(12) # DEMANDE DE BREVET EUROPEEN

(21) Numéro de dépôt: 86870029.5

(22) Date de dépôt: 07.03.86

(51) Int. Cl.⁴: **G 21 C 17/00**
**B 25 J 5/00**

(30) Priorité: 09.03.85 EP 85102712

(43) Date de publication de la demande:
08.10.86 Bulletin 86/41

(84) Etats contractants désignés:
AT BE CH DE FR GB IT LI LU NL SE

(71) Demandeur: ATELIERS DE CONSTRUCTIONS
ELECTRIQUES DE CHARLEROI (ACEC) Société Anonyme
Avenue Lloyd George 7
B-1050 Bruxelles(BE)

(72) Inventeur: Pinsmaille, Raymond
rue des Résistants 40
B-5128 Beez(BE)

(72) Inventeur: Da Costa Cabral Galvao, Luis
17, Avenue des Crocus
B-6290 Nalinnes(BE)

(72) Inventeur: Duchene, Alain
rue de Jamioulx 37
B-6428 Ham-sur-Heure(BE)

(72) Inventeur: Colard, Dominique
rue Gillemont 21
B-6428 Ham-sur-Heure(BE)

(54) Véhicule télécommandé pour inspection et intervention en milieux hostiles.

(57) Véhicule télécommandé par câble ou par voie hertzienne comportant, en plus des moyens d'alimentation, de commande électrique et/ou électronique, de mesure et de manipulation diverses, au moins un châssis principal (2) équipé d'une paire de chenilles (5,5') tournant chacune sur au moins deux barbotins (6,7 et 6',7'), caractérisé en ce que le châssis principal (2) constitué par deux longerons parallèles (9,9') maintenus à distance par des éléments d'entretoisement (11) est munis d'au moins deux paires de barbotins (6,6' et 7,7') reliés entre eux par un essieu creux (15,17), qui comportent de manière intégrée dans chaque fois l'un des deux barbotins formant une paire (6',7) et ce dans des barbotins correspondant à des côtés opposés, un moteur, un réducteur et un frein (13,15) et en ce que ledit châssis principal (2) est équipé d'un dispositif de mesure d'inclinaison (280) du châssis principal par rapport à la direction horizontale.

./...

Fig. 1

# VÉHICULE TÉLÉCOMMANDÉ POUR INTERVENTIONS
## DANGEREUSES OU EN MILIEU HOSTILE

La présente invention est relative à un véhicule télécommandé par câble ou par voie hertzienne, comportant, en plus des moyens d'alimentation, de commande électrique et/ou électronique, des moyens de mesure et de manipulations diverses, au moins un châssis principal équipé d'une paire de chenilles tournant chacune sur au moins deux barbotins, destinés à effecteur diverses interventions en milieux hostiles telle que la surveillance, la mesure et la maintenance dans des bâtiments de centrales nucléaires ou la manipulation de matières nocives, ou des interventions dangereuses telles que des interventions militaires ou paramilitaires de déminage, de reconnaissance, de décontamination, de surveillance et de lutte anti-feu.

Dans les installations nucléaires, telle que centrale nucléaire ou usine de retraitement de combustible nucléaire, il est indispensable de procéder régulièrement à l'inspection des principaux composants pendant leur fonctionnement. Toutefois, à cause des niveaux élevés des radiations ionisantes, les périodes d'exposition d'équipes humaines sont très courtes, voire même dans certains cas impossibles.

D'autre part, les accidents survenus à l'une ou l'autre centrale nucléaire ont démontré la nécessité de disposer de moyens permettant d'intervenir rapidement en circonstances de crises.

Dans ces installations nucléaires, les opérations d'inspections et d'intervention sont rendues particulièrement difficiles par les niveaux élevés de température, de radioactivité et par la difficulté d'accès dû à la géométrie et à l'exiguité des lieux de travail.

Des dipositifs automoteurs servant soit à des inspections de la paroi de la cuve principale de réacteur et plus particulièrement au contrôle des soudures, soit à des inspections des conduits d'alimentation en fluide de refroidissement du corps de réacteur nucléaire, soit encore à l'inspection de tout autre surface des composants de réacteur ont été mis au point.

Il existe également un besoin de fournir des véhicules télécommandés pour diverses interventions militaires ou paramilitaires dangereuses, telle que le déminage et la neutralisation ou la destruction d'un explosif, la reconnaissance de l'état de la situation sur un champ d'action, la surveillance de site, c'est-à-dire la détection et les actions contre des intrusions dans des sites tels que des bases militaires, champs de recherches et de productions nucléaires, entrepôts et centres industriels, l'action de surveillance systématique suivant des parcours prédéterminés pour la sécurité des bâtiments et, également la lutte anti-feu et le sauvetage.

Par le document "Remote sensing technology proceedings, 32nd conference on remote systems technology", volume II, 1984, pages 11 à 18, on connaît un véhicule télécommandé monté sur chenilles qui est cependant destiné à des applications très particulières et qui a des possibilités relativement limitées de déplacement à cause de son encombrement et ses équipements de contrôle et de commande sont relativement sommaires. Notamment le guidage sur un site accidenté est pratiquement impossible étant donné que l'on ne dispose pas des moyens de commande adéquats et que le véhicule télécommandé est relativement difficilement maniable, vu sa conception et son encombrement.

Par le document "Kerntechnick, Abteilung Reaktor Betrieb und Technick, Gesellschaft für Kernforschung mbH", volume 17, no. 12, 1975, pages 527-532, Karlsruhe, DE, G.W. Köhler et al : "Manipulator Fahrzeug-System MF2 und seine Verwendungsmöglichkeiten", on connaît également un véhicule télécommandé monté sur chenilles qui est très encombrants et qui est plutôt destiné à effectuer des interventions de remplacement d'outils ou des prélèvements d'échantillons à l'air dans de grands espaces. Il ne convient néanmoins pas pour des interventions dans des bâtiments tels que les centrales nucléaires ou autres étant donnés que ces dimensions sont trop importantes et sa maniabilité est, de ce fait, relativement réduite. L'objet de la présente invention vise à fournir un véhicule télécommandé du type susmentionné qui permet d'effectuer les interventions dangereuses ou en milieu hostile telles que celles qui sont citées ci-dessus, de manière aisée.

Un autre but de la présente invention vise à fournir un véhicule télécommandé du type susmentionné qui se caractérise par un agencement particulièrement avantageux qui permet de notablement réduire son encombrement.

Un autre but de la présente invention vise à fournir un véhicule télécommandé du type susmentionné qui est équipé de sondes de mesure et d'un système de commande particulièrement approprié aux applications qui lui sont destinées.

Un autre but de la présente invention vise à fournir un véhicule télécommandé du type susmentionné conçu de manière modulaire qui permet le montage aisé de divers manipulateurs adaptés aux interventions voulues et permet également, grâce à sa conception particulière, un accès facile aux moyens d'entraînements en cas de panne.

Un autre but de la présente invention vise à fournir un véhicule télécommandé du type susmentionné qui permet des interventions diverses, grâce à son agencement modulaire et qui n'exige pas une étude approfondie du véhicule en fonction de l'intervention voulue, étant donné qu'il peut très aisément être modifié.

Selon la présente invention, le véhicule télécommandé comporte un châssis principal qui est consitué par deux longerons parallèles maintenus à distance par des éléments d'entretoisement et qui est muni d'au moins deux paires de barbotins reliés entre eux par un essieux creux, qui comportent de manière intégrée dans chaque fois l'un des deux barbotins formant une paire et ce dans des barbotins correspondants à des côtés opposés, un moteur, un réducteur et un frein, ledit châssis principal étant équipé, de plus, d'un dispositif de mesure d'inclinaison du châssis principal par rapport à la direction horizontale.

Selon une forme d'exécution préférée de la présente invention, le châssis principal est équipé d'au moins un châssis auxiliaire, de préférence deux châssis auxiliaires, monté à l'avant et à l'arrière du châssis principal, et chaque châssis auxiliaire est également monté sur chenilles, une des paires de barbotins permettant la rotation des chenilles du ou des châssis auxiliaires étant montée de manière co-axiale avec l'une des paires de barbotins du châssis principal, l'une des paires de barbotins d'un châssis auxiliaire comportant, de manière intégrée dans l'un des deux barbotins formant ladite paire de barbotins au moins un moteur et un réducteur.

Dans cette forme d'exécution particulière, les barbotins du châssis principal sont avantageusement dotés d'une double rangée d'encoches qui permet de transmettre la traction aux chenilles du châssis auxiliaire.

Le véhicule télécommandé selon la présente invention est apte à se déplacer de façon complètement autonome dans des milieux radioactifs, insalubres ou dangereux en adaptant sa configuration aux obstacles rencontrés pour remplir des missions de contrôle, de maintenance et de réparation.

En procédant aux missions d'inspection de routine, de façon complètement autonome et automatique, ce véhicule télécommandé remplace les équipes humaines, actuellement utilisées pour ces missions dangereuses.

Le véhicule télécommandé peut se déplacer dans un environnement encombré d'écrans biologiques formant de véritables labyrinthe il peut graver des pentes et même monter des escaliers, grâce à l'utilisation d'une paire centrale de chenilles principales assurant la traction et à deux paires de chenilles auxiliaires assurant la stabilité du véhicule face aux franchissements d'obstacles.

Selon une forme d'exécution particulièrement avantageuse, le véhicule comporte un dispositif de mesure de la position relative du châssis auxiliaire correspondant, par rapport au châssis principal. Un tel dispositif de mesure permet en combinaison avec le dispositif de mesure d'inclinaison du châssis principal, de visualiser le véhicule de l'invention moyennant une image synoptique sur un écran qui rend ainsi la commande à distance particulièrement aisée, notamment lorsque ledit véhicule est hors de portée de vue de l'opérateur.

Le véhicule susmentionné peut évidemment être équipé de divers manipulateurs connus en soi et de sondes de mesure des conditions ambiantes telles que des capteurs de pression, de température, d'humidité, de vibrations, de niveau de bruit et de niveau de radiation. Il peut également être équipé de plusieurs caméras fixes ou mobiles avec ou sans zoom motorisé.

Il est bien évident que le véhicule télécommandé peut être commandé par voie hertzienne ou par câble. Dans le cas d'une commande à distance par voie hertzienne, le véhicule doit évidemment comporter une alimentation autonome. D'autres détails et caractéristiques du véhicule télécommandé établi conformément à l'invention, apparaîtront encore, à travers la description qui suit, d'exemples de réalisation, donnés à titre indicatif et non limitatif, en référence aux dessins annexés dans lesquels :

- la figure 1 est une vue en plan éclatée du châssis du véhicule télécommandé selon la présente invention;

- la figure 2 est une vue en coupe du réducteur intégré dans le barbotin;

- les figures 3, 4, 5 et 6 représentent plusieurs positions du véhicule selon l'invention;

- la figure 7 est une représentation schématique du véhicule selon l'invention surmonté d'un bras manipulateur à deux degrés de liberté;

- la figure 8 est une vue perspective d'un autre télémanipulateur monté sur ledit véhicule;

- la figure 9 est une vue du dispositif repli-déploiement des télémanipulateurs;

- la figure 10 est une vue du dispositif de guidage optique;

- la figure 11 montre les diagrammes de positionnement du véhicule sur la piste de guidage;

- la figure 12 montre un exemple d'implantation à travers laquelle le véhicule doit se déplacer;

- la figure 13 est un exemple du schéma de l'installation de transmission des informations par voie hertzienne;

- la figure 14 représente un autre exemple du schéma de l'installation de transmission des informations par voie hertzienne.

Il est bien entendu que ce véhicule, parfaitement symétrique se déplace indifféremment dans un sens ou dans l'autre avec la même facilité.

Le véhicule télécommandé 1 est constitué par un châssis principal 2, une partie avant appelée châssis auxiliaire avant 3, une partie arrière appelée châssis auxiliaire arrière 4.

Le châssis principal 2 est équipé d'une paire de chenilles dite principale 5, 5' sous-tendu par deux paires de barbotins 6, 6' et 7, 7'. Les barbotins sont logés dans des longerons 9, 9' qui sont maintenues essentiellement parallèles par des éléments d'entretoisement inférieurs 10, 10' et supérieurs 11, 11'.

Dans les barbotins 7 et 6' sont intégrés un groupe moto-réducteur-frein portant les repaires généraux 13 et 15.

Chaque paire de barbotins est relié par un es-

sieu creux 15, 17.

On conçoit donc aisément que le châssis d'une telle simplicité est très peu encombrant et permet un accès facile au divers éléments constitutifs en cas de panne ou d'entretien.

Avantageusement, des boîtiers 19 et 19' peuvent être prévus entre les barbotins 6, 7 et 6', 7', respectivement, qui contiennent les éléments de commande électronique ainsi que les refroidisseurs nécessaires à cet effet.

Le châssis auxiliaire avant 3 est constitué par deux longerons supplémentaires auxiliaires 21, 21' tenus à distance par un élément d'entretoisement 22.

Les chenilles auxiliaires avant 23, 23' représentées par des traits d'axes sont soutendues par une paire de barbotins 25, 25' et par une paire de barbotins jumelée aux barbotins repérés en 7, 7'.

De manière analogue, le châssis auxiliaire arrière 4 est constitué par des longerons 27, 27' écartés par un élément d'entretoisement 28. Les chenilles auxiliaires arrières 29, 29' sont soutendues par une paire de barbotins 31, 31' et par une paire de barbotins jumelée aux barbotins 6, 6' du châssis principal. Tant les chenilles principales que les chenilles auxiliaires peuvent encore être guidées par des galets supplémentaires 32, 32'.

Les barbotins jumelés situés du côté opposé aux barbotins comportant le groupe moto-réducteur-frein pour la commande du châssis principal sont également équipés d'un pareil groupe 33, 35 pour la commande des mouvements ascendant ou descendant des châssis auxiliaires 3 et 4.

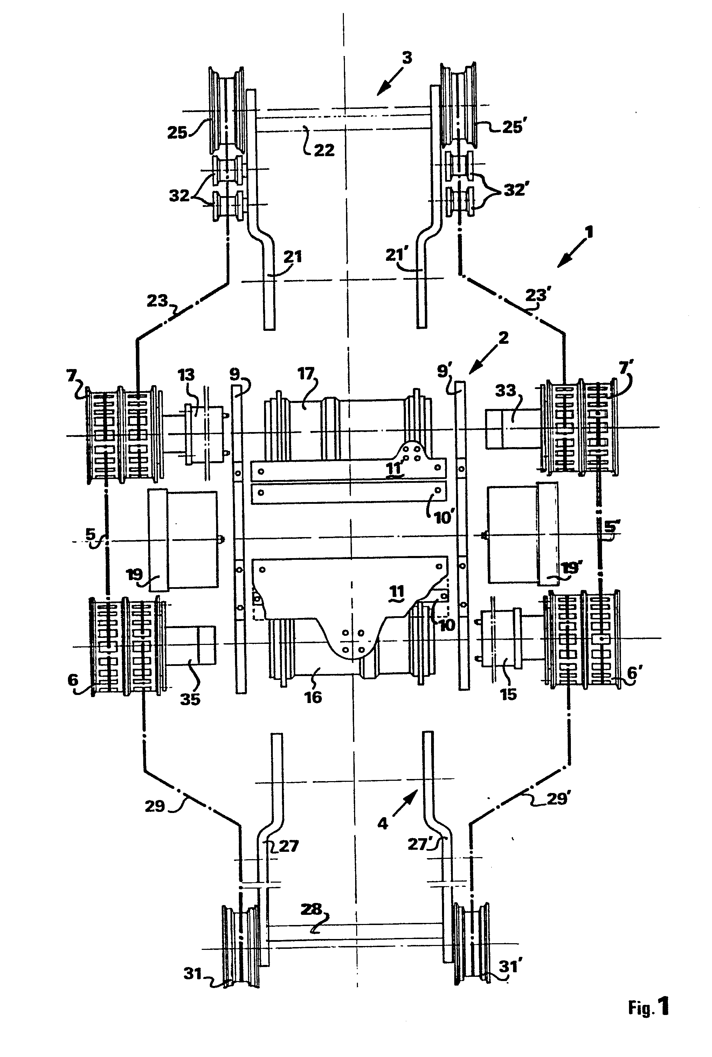

Dans l'exemple de réalisation représenté à la figure 1, les châssis auxiliaires 3 et 4 sont dotés d'un mouvement de rotation autour de l'axe des barbotins jumelés 6, 6' et 7, 7'. Grâce à l'utilisation de moteurs indépendants intégrés dans les barbotins pour la mise en oeuvre des ses mouvements, on obtient un agencement particulièrement avantageux, notamment du point de vue de
l'encombrement et la facilité d'emplacement des divers
moyens de commande et de mesure.

Actionné de façon indépendante par un moteur
électrique auxiliaire, chaque châssis auxiliaire peut,
par exemple, se lever jusqu'à la verticale pour réduire
son encombrement au sol, ou tout au contraire, s'abaisser pour accroître vers le haut la portée des accessoires embarqués. Il est bien évident que des moyens de
commande électroniques éventuellement programmés contrôlent le sens de rotation de chaque moteur auxiliaire
ainsi que la vitesse et le sens de rotation de chaque
moteur de traction pour faire suivre, un parcours préprogrammé ou imposé par l'opérateur.

Avantageusement, les quatre barbotins principaux
(6,6' et 7,7') sont dotés d'une double rangée d'encoches
qui permettent de transmettre la traction aux chenilles
(23,23' et 29,29') du châssis auxiliaire. De cette manière, on assure une meilleure stabilité du véhicule et
une meilleure adhérence en sol.

Le châssis principal est conçu pour répondre au
critère de modularité de manière que tous ces composants
se fixent directement et conserve une grande accessibilité pour favoriser la rapidité du contrôle, du remplacement ou de la réparation des composants.

Toute panne est rapidement détectée au moyen d'un
logiciel de diagnostic propre aux circuits, ou par le
branchement d'équipements tests dans des connecteurs
prévus à cet effet.

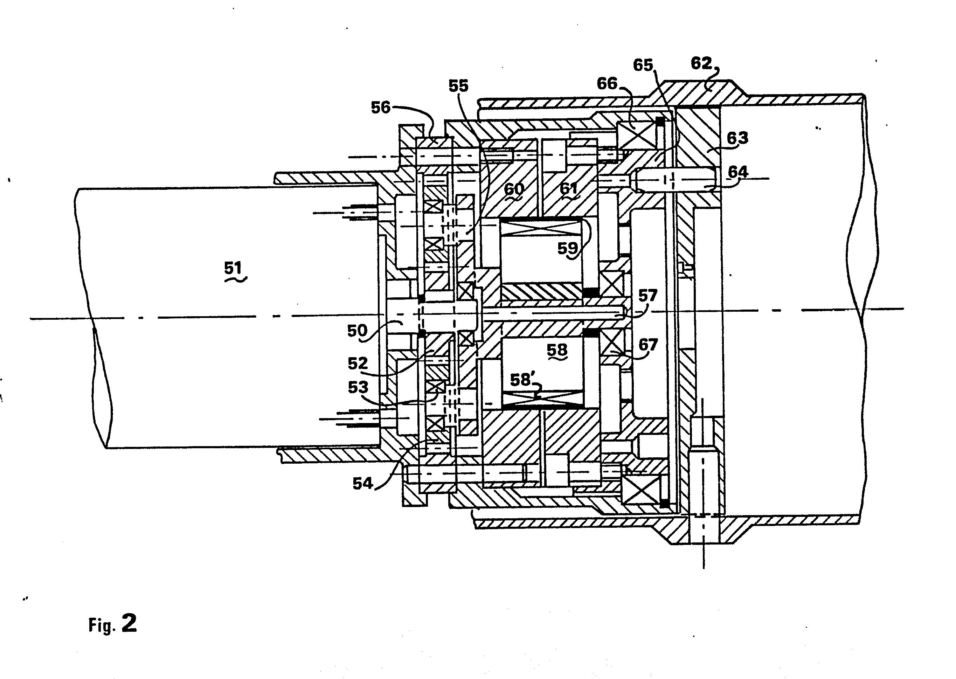

La figure 2 représente, en coupe, le réducteur
utilisé pour la commande des châssis auxiliaires. Le réducteur est intégré dans le barbotin de manière à réduire au maximum l'encombrement du véhicule selon l'invention. Ledit réducteur est mis en mouvement par l'arbre
50 du moteur d'entraînement 51 et se compose essentiellement d'un pignon central 52 qui entraîne en rotation

**0197020**

au moins trois pignons dits satellites 54 montés librement moyennant des roulements 53. Lesdits pignons satellites tournent également sur un pignon fixe planétaire 56 à denture intérieure. Les axes des satellites 54 sont logés dans un disque 55 qui peut tourner sur son axe 57 aligné sur l'arbre moteur 50. L'arbre 57 comporte un générateur elliptique d'ondulations 58 qui lui est solidaire. Ledit générateur d'ondulations 58 porte à sa périphérie un roulement 58' dont la couronne extérieure 59 est flexible et porte une denture extérieure qui interagit avec la denture intérieure d'une couronne rigide stationnaire 60 et d'une couronne rigide entraînée 61. La couronne stationnaire 60 comporte un nombre de dents légèrement supérieur à celui de la couronne flexible 59, généralement deux dents en plus. La couronne entraînée 61 comporte autant de dents que la couronne flexible 59.

Grâce à cette différence de dents, la couronne flexible 59 est entraînée en un mouvement relatif par rapport à l'arbre et entraîne ainsi la couronne entraînée 61. Celle-ci est rendue solidaire de la pièce rotative 62 du barbotin, moyennant un disque 63, des goupilles 64, une bague intermédiaire 65 qui s'appuie sur deux roulements 66 et 67 dans la partie fixe du barbotin. On obtient ainsi aisément une réduction de l'ordre de 200 à 300 fois.

On peut utiliser un réducteur analogue dans les barbotins destinés à l'entraînement du mouvement de translation, éventuellement en y supprimant l'engrenage pignons central (satellites) planétaire.

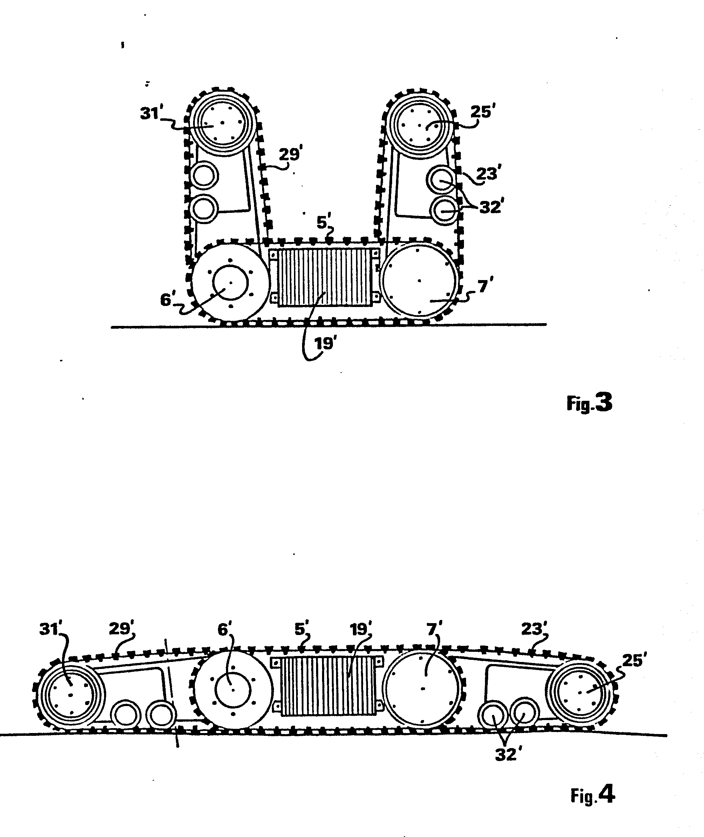

Les figures 3 et 4 représentent, respectivement, une position rétractée et une position déployée du châssis du véhicule télécommandé modulaire selon l'invention. Des repères de référence identiques ont été utilisés pour des éléments identiques ou analogues à ceux de la figure 1.

La commande électronique du mouvement des châssis auxiliaires comporte avantageusement un blocage mécani-

0197020

que ou, de préférence, électronique du mouvement dans une position maximale approchant une rotation de 90° par rapport au plan du châssis principal.

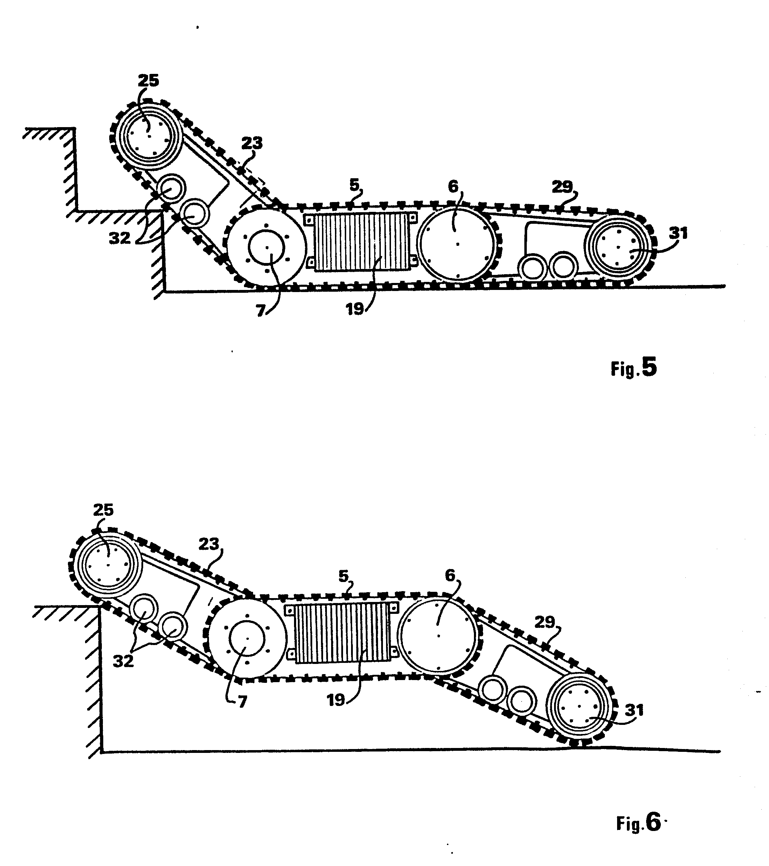

Les figures 5 et 6 montrent comment il est possible de surmonter des obstacles au moyen du véhicule selon l'invention, tout en maintenant le châssis principal en position essentiellement horizontale. Ceci est particulièrement important dans certaines applications et n'est possible que grâce à la conception avantageuse du dispositif selon l'invention. En effet, l'utilisation du dispositif de mesure de l'inclinaison (voir plus loin) qui permet de mesurer l'inclinaison du châssis principal par rapport à l'horizontale et que l'utilisation d'un dispositif de mesure de l'inclinaison des châssis auxiliaires par rapport au châssis principal permettent, grâce à des moyens électroniques adéquats, de visualiser les positions du véhicule sur un écran et de rendre ainsi la commande à distance aisée.

Le dispositif de mesure d'inclinaison du châssis principal par rapport à l'horizontale sera décrit plus en détail dans la suite du mémoire descritif, tandis que les dispositifs de mesure d'inclinaison des châssis auxiliaires par rapport aux châssis principale, qui ne sont pas représentés sur les figures, sont avantageusement intégrés dans les barbotins correspondant ou, dans les essieux qui y correspondent.

Le véhicule selon l'invention peut également comporter trois dispositifs d'inclinaison indépendants, un sur le châssis principal et un sur chaque châssis auxiliaire. La position relative peut alors être déterminée par simple différence des signaux.

Pour des raisons de clarté, le véhicule télécommandé selon la présente invention a été représenté sans les accessoires telle que les bras manipulateurs, d'autres sondes de mesure etc. dans les figures 1 à 6.

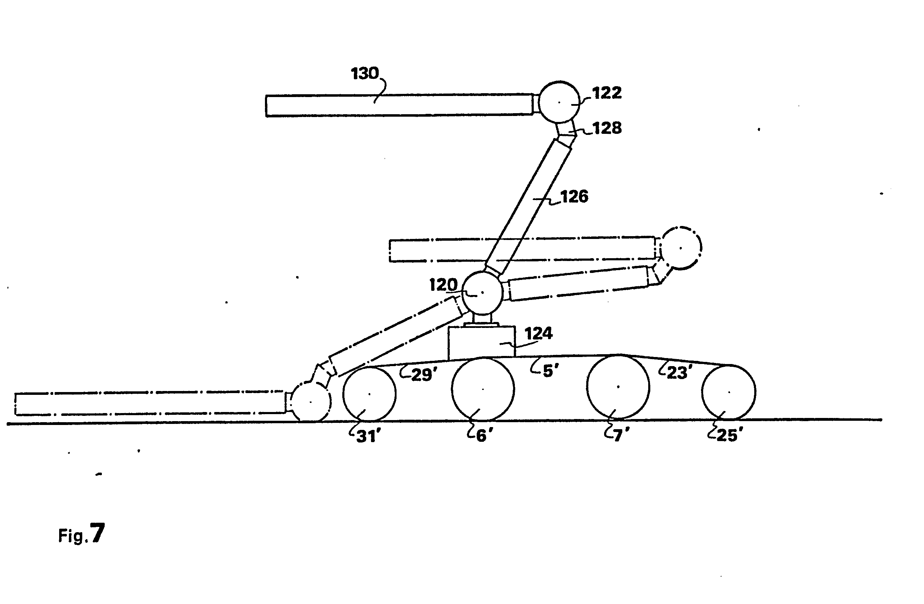

La figure 7 représente, de manière schématique un type de bras manipulateur monté sur le véhicule selon l'invention.

Selon la forme d'exécution représentée à la figure 7, le véhicule selon l'invention décrit ci-dessus est surmonté d'un bras articulé qui comporte au moins deux articulations 120, 122. Ledit bras articulé peut être monté sur un socle 124 fixe ou, de préférence mobile en rotation qui prend appui sur l'un au moins des éléments d'entretoisement 11 qui affecte une forme telle que l'axe du socle 124 soit disposé au-dessus de l'axe de l'essieu (16). Selon une forme d'exécution particulièrement préférée, l'avant bras 126 est coudé en 128 de manière à sensiblement réduire l'encombrement de celui-ci et en vue de faciliter certaines manoeuvres telle que des déploiements particuliers, comme représenté en traits d'axe sur la figure.

Avantageusement, les articulations 120 et 122 comportent, de manière intégrée le moteur d'entraînement, le réducteur et éventuellement un frein. Le réducteur utilisé est avantageusement du type analogue à celui qui est utilisé pour l'entraînement des barbotins.

Avantageusement, le bras 130 est équipé d'une pince (non représentée) ou d'un canon tel qu'un canon à eau ou un canon de fusil classique, éventuellement par l'intermédiaire d'une articulation supplémentaire non représentée. Un tel bras manipulateur convient particulièrement bien pour des applications militaires et notamment pour la destruction de charges explosives.

Dans le cas de l'utilisation susmentionnée, le véhicule est avantageusement équipé d'une caméra orientable et éventuellement de dispositifs d'éclairage appropriés, qui permet de viser un objet bien déterminé à distance, en tenant compte des erreurs de parallaxe.

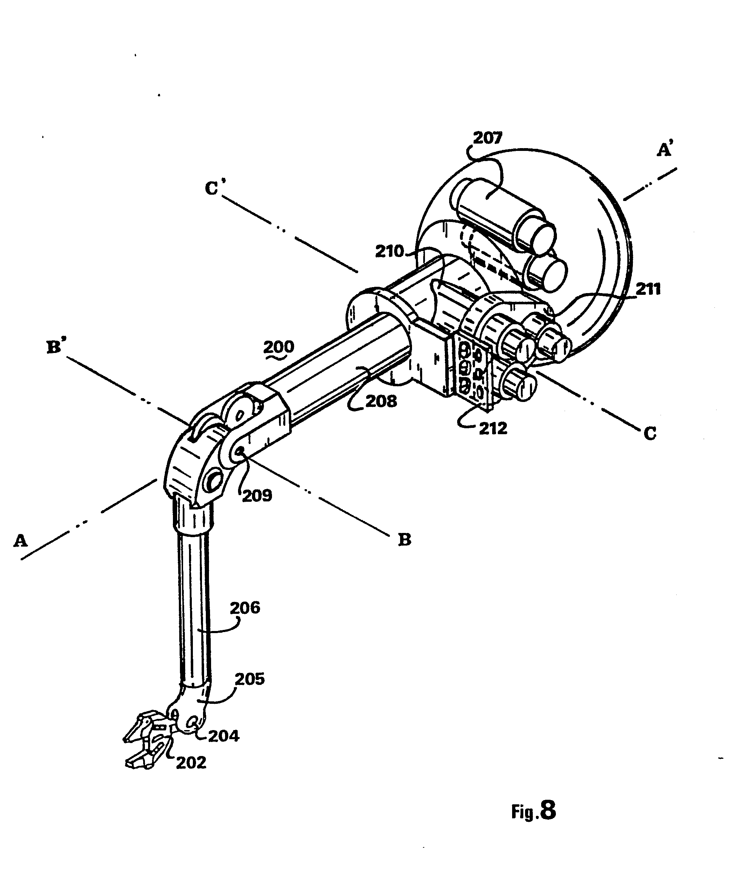

La figure 8 est relative a un manipulateur double connu par le document US-A-4 062 455. De cette manière on fait apparaître clairement que le véhicule télécommandé selon l'invention est parfaitement modulaire et peut comporter d'innombrables manipulateurs adaptés aux utilisations particulières.

De manière plus détaillée, le manipulateur représenté est doté de 7 degrés de liberté correspondant aux sept mouvements suivants. La prise d'un objet par une pince 202, l'articulation du poignet autour d'un pivot 204, la rotation d'un étrier de poignet 205, la torsion d'un avant bras 206. Ces quatre mouvements sont obtenus à l'aide de quatre moteurs disposés par paires en un assemblage d'équilibrage 207.

À ces quatre mouvements s'ajoutent un mouvement de torsion d'un bras 208 suivant un axe AA' ultérieurement appelé axe de bras AA' du manipulateur gauche 200, un mouvement d'articulation du coude autour d'un pivot de coude 209 suivant un axe BB' et un mouvement de rotation d'une épaule 210 autour d'un axe CC'. Ces trois mouvements supplémentaires sont obtenus à l'aide de trois moteurs disposés sur un boîtier 211 qui porte une plaque de raccordement 212 permettant la fixation du manipulateur gauche 200 à un dispositif de repli-deploiement.

Un rôle important du dispositif de repli-deploiement est de modifier l'écartement des plans verticaux parallèles contenant respectivement l'axe du bras AA' du manipulateur gauche 200 et son homologue, l'axe du bras AA' du manipulateur droit 200'. Par commodité, on exprimera ultérieurement cette notion en parlant simplement de l'écartement des manipulateurs 200 et 200'.

La paire de manipulateurs 200 et 200' embarqués sur le véhicule télécommandé constitue la paire de manipulateurs esclaves; ils sont télécommandés par une commande digitale à microprocesseurs, capable d'effectuer l'asservissement en position, en effort et en temps réel au départ d'une paire de manipulateurs maîtres actionnés par un opérateur depuis une salle de contrôle. Un retour d'effort à rapport d'amplification variable permet à l'opérateur d'exercer des efforts importants sans éprouver de fatigue tout en gardant la sensibilité.

0197020

La télécommande de la paire de manipulateurs exige à elle seule la transmission de quatorze informations depuis la salle de contrôle jusqu'au véhicule pour actionner les sept mouvements de chaque manipulateur et un retour identique depuis le véhicule jusqu'à la salle de contrôle pour contrôler l'exécution des mouvements commandés.

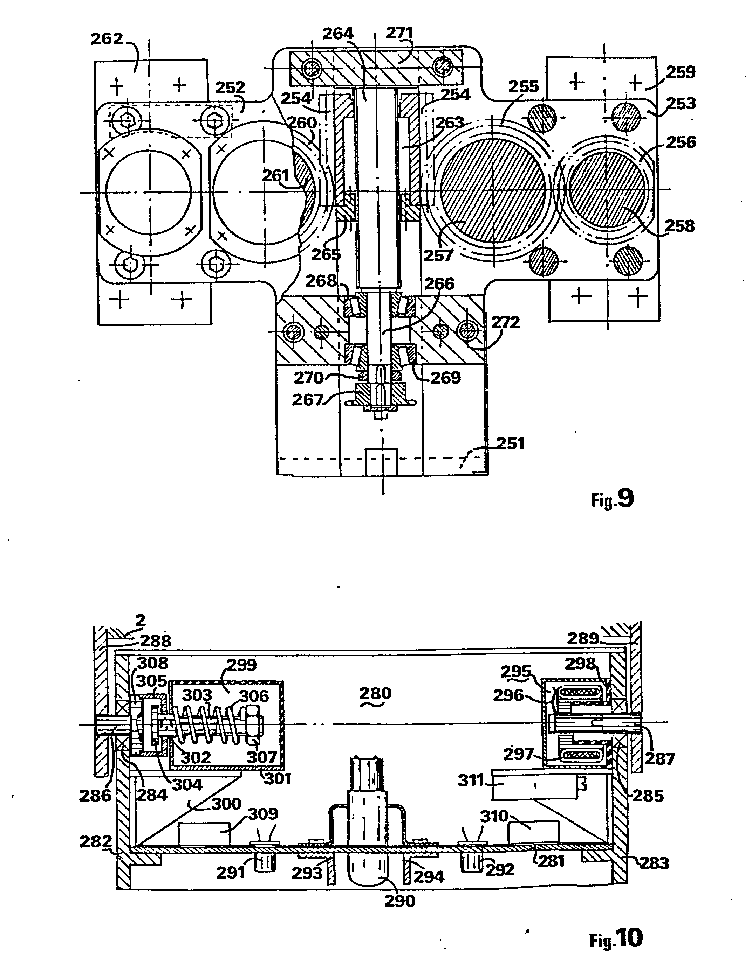

La figure 9 représente une coupe partielle d'une vue en élévation du mécanisme de repli-déploiement 250. Ce mécanisme comporte une base 251 sur laquelle s'appuient deux montants parallèles en forme de croix. Un premier montant n'apparaît que partiellement à gauche de la figure 9, il sera ultérieurement appelé un montant avant 252. Le second montant, disposé parallèlement, sera ultérieurement appelé le montant arrière 253. Les deux bras horizontaux des montants 252 et 253 servent de supports à deux trains d'engrenages disposés de part et d'autre d'une double crémaillère 254 située dans la branche verticale. Ces deux trains d'engrenages sont identiques, mais seul le train d'engrenages situé à droite de la figure 9 est visible entièrement.

Ce train d'engrenages se compose d'une première roue dentée 255 engrenant d'une part avec la double crémaillère 254 et d'autre part avec une seconde roue dentée 256. La première roue dentée 255 est solidaire d'un arbre 257, la seconde roue dentée 256 est solidaire d'un arbre 258 dont une extrémité est dotée d'une plaque d'appui 259 sur laquelle s'attachera le manipulateur gauche 200'.

Dans l'exemple de réalisation de la figure 9, la seconde roue dentée 256 ne porte pas une denture sur toute sa périphérie mais seulement sur un secteur déterminé donnant à la plaque d'appui 259 un mouvement de rotation limité.

Semblablement un second train d'engrenages, dont apparaissent seulement sur la figure 9 une partie d'une première roue 260 et une partie d'un arbre 261 qui lui est solidaire, actionne lui aussi une seconde plaque d'appui 262 sur laquelle s'attachera le manipulateur droit 200.

La double crémaillère 254 est commandée par un écrou à billes 263 collaborant avec une vis à billes 264. L'écrou à billes 263 est solidarisé à la double crémaillère 254 par l'intermédiaire d'un couvercle 265 fixé par vis.

La vis à billes 264 se prolonge d'une partie cylindrique, appelée arbre de commande 266 sur le bout duquel est fixé un pignon 267.

L'arbe de commande 266 est soutenu par deux roulements 268 et 269 et solidarisé à ceux-ci à l'aide d'un écrou 270.

Une butée supérieure 271 limite la course de la double crémaillère 254 vers le haut et une butée inférieure 272 limite sa course vers le bas.

Des interrupteurs de fin de course, non représentés, limitent l'amplitude du mouvement de rotation des plaques d'appui 259 et 262 en agissant sur le moteur, non représenté, actionnant le pignon 267.

Selon le sens de rotation de l'arbre de commande 266, les plaques d'appui 259 et 262 oscillent simultanément d'un mouvement angulaire symétrique pour modifier la position des manipulateurs 200 et 200' par déplacement de leur axe CC' dans un plan vertical.

Lorsque le mécanisme repli-déploiement 250 est en position de déploiement, la double crémaillère 254 est en position haute, comme indiqué sur la figure 9, les plaques d'appui 259 et 262 collaborant respectivement avec les plaques de raccordement des manipulateurs gauche et droit 200' et 200 imposent à ceux-ci un écartement maximum.

La position de déploiement correspond à un écartement maximum des axes de bras AA' des manipulateurs 200' et 200 pour permettre au véhicule télécommandé de couvrir un volume maximum de travail.

Pour obtenir la position de repli, on actionne l'arbre de commande 266 dans le sens de rotation qui par l'intermédiaire de la vis à billes 264 et de l'écrou à billes 263 amène la double crémaillère 254 en position basse.

En position de repli les plaques d'appui 259 et 262 ont tourné d'un angle proche de 90° donnant ainsi aux axes CC' des manipulateurs 200' et 200 une orientation presque verticale.

La position de repli correspond à un écartement minimum des axes de bras AA' des manipulateurs 200' et 200. Cette position de repli ramène l'encombrement des manipulateurs à l'intérieur d'un gabarit prédéterminé pour doter le véhicule d'une plus grande mobilité et d'une plus grande facilité d'intervention grâce à un encombrement latéral réduit.

La commande digitale à base de microprocesseurs permet de programmer les manipulateurs. Une séquence prévoit notamment la position de repli avant la mise en route du véhicule télécommandé.

La figure 10 montre la coupe d'une tête de guidage optique 280 dont est muni le véhicule télécommandé pour lui permettre d'effectuer des opérations de routine en mode autonome en suivant une piste tracée sur le sol des locaux à inspecter.

La tête de guidage optique 280 est fermée et se présente sous la forme d'un boîtier parallèlipipèdique qui comporte un fond 281 et deux flancs 282 et 283 dans la partie supérieure desquels sont insérés deux roulements 284 et 285 suivant un même axe disposé au dessus du centre de gravité de la tête de guidage optique 280 pour permettre la pendulation de celle-ci autour de deux arbres 286 et 287 solidarisés à deux montants d'étrier 288 et 289 attenant au châssis principal repéré en 2 sur la figure 1. Sur le fond 281, sont disposés une ampoule 290 d'assez forte puissance fixée au centre par une armature et deux senseurs 291 et 292 insérés de part et

d'autre de l'ampoule 290 avec un écartement strictement identique à la largeur de la bande blanche de guidage tracée sur le sol. Signalons que pour augmenter le contraste lumineux, la bande blanche est bordée de part et d'autre d'une bande noire.

. Pour éviter un rayonnement direct de l'ampoule 290 sur les senseurs 291 et 292 qui l'entourent, deux visières 293 et 294 sont interposées entre l'ampoule 290 et les senseurs 291 et 292. Ces visières 293 et 294 servent également à protéger l'ampoule contre les chocs.

La tête de guidage optique 280 ainsi pendulée garde toujours son fond 281 en position horizontale pour permettre un guidage en mode autonome du véhicule télécommandé sur une volée d'escaliers à claire-voie à l'aide d'une piste tracée sur chaque marche.

Un dispositif de mesure d'inclinaison 295 permet de mesurer l'inclinaison du châssis principal 2 par rapport à la direction horizontale et constitue un élément de sécurité primordial permettant notamment de contrôler si le véhicule s'engage correctement sur une rampe d'accès ou sur une volée d'escaliers d'inclinaison connue.

Dans l'exemple de réalisation monté en figure 10, le dispositif de mesure d'inclinaison 295 est un potentiomètre composé d'un curseur 296 solidaire à l'axe 287 qui étant fixé à l'étrier 289 est donc solidaire du châssis principal 2 et d'une bobine 297 rendue solidaire du montant 283 de la tête de guidage optique 280 par l'intermédiaire d'un support isolant 298 qui centre cette bobine 297 sur l'arbre 287.

La tête de guidage optique 280 comporte encore un système d'amortissement 299 qui réduit ses oscillations lorsque par exemple le châssis principal 2 de véhicule télécommandé change son inclinaison à l'entrée ou à la sortie d'une rampe d'accès.

Dans l'exemple de réalisation montré en figure 10, le dispositif d'amortissement 299 comporte un support 300, solidaire de la tête de guidage optique 280, servant d'assise à une cornière 301 dont l'aile disposée parallèlement au flanc 282 est percée d'un trou hexagonal 302 co-axial à l'arbre 286 et dans lequel coulisse une tige 303 également de forme hexagonale pour empêcher sa rotation à l'intérieur du trou hexagonal 302.

La tige hexagonale 303 est munie d'une tête 304 servant d'épaulement s'appuyant sur un cylindre de frottement 305 dont le fond, percé d'un trou cylindrique d'un diamètre suffisant pour que le cylindre de frottement 305 tourne librement par rapport à la tige hexagonale 303, est interposé entre la tête 304 de la tige hexagonale 303 et l'aile verticale de la cornière 301, un ressort 306 enfilé sur la tige hexagonale 303 et prenant appui sur l'aile verticale de la cornière 301 met par l'intermédiaire de la tête 304, le fond du cylindre de frottement 305 sous une pression réglable à l'aide d'une vis 307. Le cylindre de frottement 305 est fixé à une couronne 308 solidaire de l'arbre 286.

Lorsque la tête de guidage optique 280 est animée d'un mouvement d'oscillation il y a: déplacement relatif avec frottement entre le fond du cylindre de frottement 305 d'une part, la tête 304 et l'aile verticale de la cornière 301 d'autre part. En agissant sur la vis 307 on peut réduire à volonté les oscillations de la tête de guidage 280 par rapport au châssis principal 2.

Le faisceau lumineux émis par l'ampoule 290 est réfléchi vers les senseurs 291 et 292 qui dans l'exemple de réalisation de la figure 10 sont des diodes dont le signal de sortie est amplifié dans des circuits amplificateurs 309 et 310. Un potentiomètre d'équilibrage 311 permet de corriger les faibles dispersions de fabrication des diodes.

Lorsque le véhicule télécommandé est convenablement positionné au dessus de la piste de guidage, le faisceau lumineux émis par l'ampoule 290 est réfléchi de façon identique vers les senseurs 291 et 292 et les signaux délivrés par les amplificateurs 309 et 310 sont identiques.

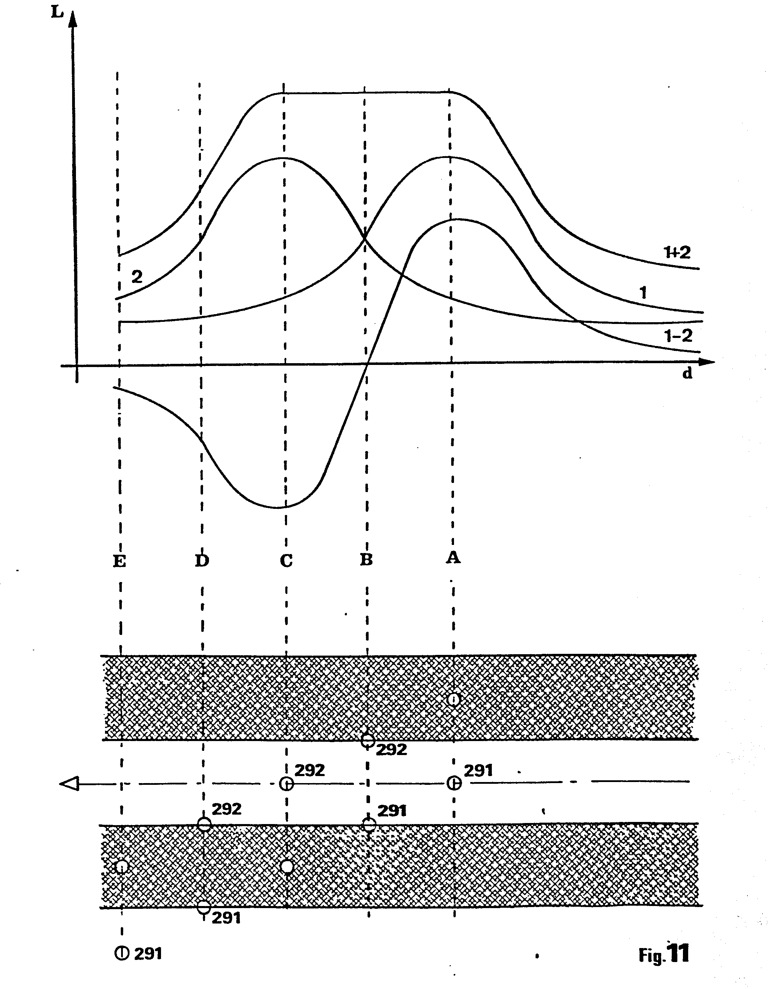

La figure 11 montre les diagrammes donnant la luminosité perçue par les senseurs en fonction de leur position par rapport à la piste de guidage servent de base au guidage optique du véhicule télécommandé.

Les senseurs 291 et 292, situés de part et d'autre de l'ampoule 290 dans la tête de guidage optique 280 et écartés l'un de l'autre d'une distance égale à la largeur de la bande blanche située au centre de la piste de guidage sont disposés à une courte distance du sol et par l'aménagement de jupes entourant le châssis principal 2 ne sont influencés que par les rayons réfléchis de l'ampoule 290. Les luminosités perçues par les senseurs 291 et 292 sont respectivement traduites par les courbes 1 et 2 de la figure 11.

Les signaux issus des senseurs 291 et 292 sont, au sortir du potentiomètre d'équilibrage 311, envoyés à un calculateur embarqué sur le véhicule télécommandé pour commander les deux moteurs de traction en imposant des vitesses de rotation aptes à ramener le véhicule dans l'axe de la piste de guidage.

Ce calculateur réalise la somme et la différence des signaux perçus par les senseurs 291 et 292. Ces résultats sont transcrits sur la figure 11 par les courbes 1 + 2 et 1 - 2.

La figure 11 montre la correspondance entre la position du véhicule simplement représenté par les deux senseurs 291 et 292 et les diagrammes obtenus après traitement dans le calculateur le long d'une droite de rappel verticale identifiée successivement en A, B, C et D.

La courbe 1 - 2 est utile dans sa partie centrale pour permettre une correction de trajectoire du véhicule directement proportionnelle.

Lorsque le véhicule est bien positionné sur la piste de guidage, l'ampoule 290 se trouve dans l'axe de la piste et les deux senseurs 291 et 292 sont situés juste au dessus des limites gauche et droite de la bande blanche centrale. Cette position correspond à la situation décrite en B de la figure 11. Les senseurs 291 et 292 perçoivent une même quantité de la lumière réfléchie et la différence des signaux émis par ces senseurs est nulle.

A ce stade de l'exposé, on peut établir la comparaison entre une tête de guidage consituée de deux senseurs et celle constituée par un seul senseur en considérant respectivement la courbe 1 - 2 et une courbe représentative d'un seul senseur soit par exemple la courbe 2. Il faut noter que pour une tête de guidage à un seul senseur celui-ci est placé au centre de la tête de guidage et que la partie utile de la courbe s'étend symétriquement de part et d'autre du maximum de luminosité perçue par le senseur unique, soit, dans le cas de la courbe 2, dans la zone limitée par les verticales D et B. La comparaison des courbes 1 - 2 et 2 montre que la courbe 1 - 2 présente dans sa partie utile à savoir la zone limitée par les verticales C et A une longue portion de droite donnant lieu à une relation univoque entre la position et le signal 1 - 2 alors que la courbe 2 présente en dehors du maximum une double correspondance entre la luminosité et la position. Cette comparaison fait apparaître l'avantage d'une tête de guidage à deux senseurs sur la tête de guidage à un seul senseur.

Dans l'exemple de réalisation de la tête de guidage optique montré en figure 10, les senseurs 291 et 292 doivent détecter la lumière réfléchie selon un angle de perception choisi car lorsque le véhicule télécommandé aborde une volée d'escaliers, la distance entre la piste de guidage et les senseurs passe de l'ordre de quelques centimètres à quelques dizaines de centimètres. Pour conserver une sensibilité suffisante à la lumière issue de l'ampoule 290 et réfléchie par la piste de guidage on peut éventuellement disposer un diaphragme devant chaque senseur.

Quand le véhicule se déplace en mode autonome, la correction de trajectoire se fait selon le signal 1 - 2, fourni par le calculateur, au départ des luminosités captées par les senseurs de la tête guidage 280. Lorsque par exemple les senseurs 291 et 292 occupent la position montrée en C de la figure 11 pour un véhicule se déplaçant de droite à gauche selon le sens de la flèche de cette figure et selon le résultat du signal 1 - 2 analysé dans le calculateur embarqué sur le véhicule, le moteur à traction actionnant le barbotin jumelé droit réduira un peu sa vitesse de rotation tandis que le moteur de traction agissant sur le barbotin jumelé gauche 7 augmentera un peu sa vitesse pour corriger la trajectoire du véhicule. Comme indiqué précédemment seule la portion de la courbe 1 - 2 située entre les limites déterminées par les droites de rappel passant par A et C sont utilisées en mode automatique de pilotage. Si pour une raison quelconque le véhicule se trouve en dehors de cette zone, le signal 1 - 2 ne permet plus de déterminer efficacement les corrections de trajectoires à apporter. Dans ce cas, c'est le signal 1 + 2 traité également par le calculateur du véhicule qui sera utilisé pour rectifier la trajectoire et assurer la fonction de sauvegarde. Dans les différentes positions montrées en figure 11, le signal 1 + 2 sera utilisé pour corriger la trajectoire dans les cas représentés de D et E, alors que le signal 1 - 2 sera utilisé dans les cas A, B et C.

Le châssis principal 2 est équipé de deux têtes de guidage optique disposées au centre de ses deux extrémités, mais seule la tête de guidage optique située à l'avant du véhicule selon son sens de déplacement est en fonctionnement. Le châssis principal 2 est également muni de deux détecteurs de proximité montés sur des supports inclinés pour permettre à ces détecteurs de couvrir des zones immédiatement accessibles au véhicule. De même pour ces détecteurs de proximité, seul celui disposé à l'avant du véhicule est en fonctionnement pour stopper la progression du véhicule dès qu'il perçoit une présence anormale dans la zone surveillée.

En mode de fonctionnement automatique le véhicule télécommandé progresse en suivant la piste de guidage optique par l'intermédiaire de la tête optique de guidage 280.

Le véhicule est également équipé d'un lecteur, non représenté, dont le rôle est de déchiffrer les messages disposés sur la piste optique de guidage pour indiquer les opérations à exécuter. Ces messages se présentent sous forme d'une série de traits de largeur et d'espacement différents inscrits sur la bande centrale de la piste de guidage.

Ces messages judicieusement disposés permettent au calculateur embarqué sur le véhicule de commande, l'exécution automatique de manoeuvres parfois complexes.

A titre d'exemple, examinons la succession des manoeuvres exécutées pour gravir une volée d'escaliers. Informé par ces messages optiques le véhicule va d'abord à l'approche de l'escalier réduire sa vitesse. Les châssis auxiliaires avant et arrière qui normalement sont relevés en position quasi verticale lors du déplacement du véhicule s'abaissent pour prendre une inclinaison d'attente. Dès que le véhicule attaque avec ses chenilles principales (5,5') le premier esacalier et commence à s'incliner le châssis auxiliaire avant 3 s'abaisse encore pour prendre appui sur les marches. Le véhicule progressant toujours, le châssis principal 2 s'incline toujours davantage et dès qu'une inclinaison prédéterminée est atteinte le châssis auxiliaire arrière s'abaisse à son tour pour se mettre dans le prolongement du châssis principal 2. Dès ce moment le châssis est disposé selon un seul alignement de manière à offrir une surface de pose maximum pour donner une stabilité maximum au véhicule.

Lorsque le véhicule atteint le palier, le capteur de proximité disposé à l'avant du châssis principal 2 informe le calculateur embarqué que la distance devient supérieure à celle d'une marche pour que l'ordre soit donné d'abaisser le châssis auxiliaire avant 3 jusqu'au palier.

A son tour le châssis auxiliaire arrière 4 s'abaisse pour donner au châssis principal 2 une position proche de l'horizontal.

Après que le châssis auxiliaire arrière 4 ait également atteint le palier, les châssis auxiliaires avant et arrière se relèvent pour donner au véhicule un encombrement minimum.

Toutes ces manoeuves sont exécutées en mode automatique au départ de messages inscrits sur la piste de guidage optique et d'informations fournies au calculateur embarqué sur le véhicule par le dispositif de mesure d'inclinaison 295 ou par les dispositifs confirmant le bon accomplissement de la manoeuvre précédente.

Après traitement par le calculateur ces diverses données commandent les moteurs auxiliaires actionnant l'inclinaison des châssis auxiliaires avant et arrière.

Le véhicule télécommandé emporte de nombreux appareils pour percevoir l'environnement et remplir ses missions d'inspection, de vérification, de réparation. L'équipement normalement embarqué sur ce véhicule comprend deux caméras mobiles, l'une avec zoom motorisé, l'autre avec un objectif grand angle à régulation automatique de l'ouverture du diaphragme, des capteurs pour mesurer la pression, la température, l'humidité, les niveau de bruits, de vibrations, de radiations, de matière continue.

Les grandeurs mesurées par ces capteurs sont affichées en permanence sur un moniteur graphique et comparées en permanence à des niveaux prédéterminés avec affichages d'alarme si ces niveaux sont dépassés.

La transmission des images vidéo des grandeurs mesurées par les capteurs et les consignes de commande sont par exemple assurées par voie hertzienne selon des fréquences choisies pour ne pas interférer avec d'autres équipement existants et avec une distribution d'antennes aptes à couvrir la totalité du volume interne d'une enceinte de sécurité.

Les images vidéo ainsi que les autres données en provenance du véhicule sont transmises par voie hertzienne, du véhicule vers la salle de contrôle, par un canal à large bande.

Les consignes de commande imposées depuis la salle de commande sont transmises par un autre canal à débit élevé. Cette transmission est faite à l'aide d'une installation de communication d'information par voie hertzienne, qui sera détaillée ultérieurement.

La figure 6 est un exemple d'implantation d'un bâtiment nucléaire comprenant de nombreux écrans biologiques entre lesquels le véhicule télécommandé doit se mouvoir.

Une enceinte de sécurité 320 de forme circulaire abrite une série d'écrans biologiques respectivement désignés en 321, 322, 323, 324, 325, 326, 327, 328, 329 et 330 disposés autour d'un coeur de réacteur 331.

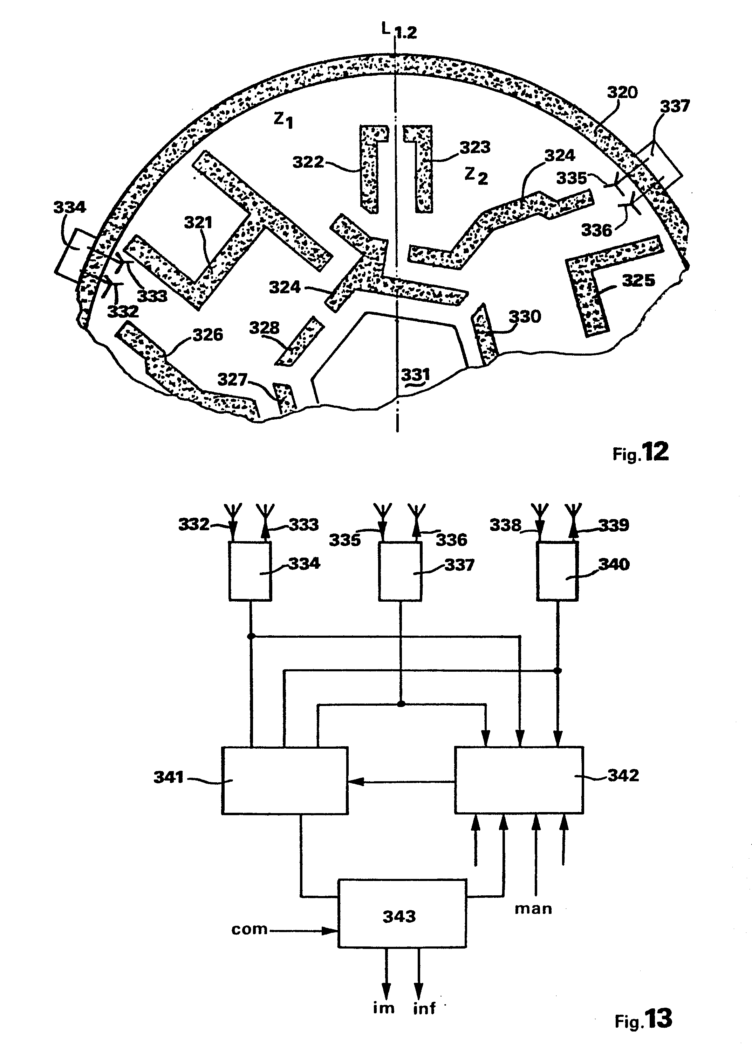

Une paire d'antennes fixes 332 et 333 est reliée à un distributeur 324, une autre paire d'antennes fixes 335 et 336 est reliée à un autre distributeur 337. Chaque paire d'antennes fixes couvre une zone géographique d'influence délimitée expérimentalement et désignée dans la figure 12 respectivement par une zone $Z_1$ sous l'influence de la paire d'antennes 332 et 333 et une zone $Z_2$ sous l'influence de la paire d'antennes 335 et 336. Par simplification, nous considérerons que la limite des zones géographiques d'influence $Z_1$ et $Z_2$ se trouve en une limite $L_{1.2}$. Par sécurité ces zones géographiques d'influence se recouvrent partiellement ou même totalement pour permettre la récupération du véhicule en cas de déficience des antennes ou du distributeur affecté à la zone suivante. Le véhicule télécommandé étant lui-même équipé d'une paire d'antennes, les signaux, allant du véhicule vers la salle de contrôle ou vice-versa, sont transmis, dans chaque zone géographique d'influence, par l'intermédiaire de la paire d'antennes fixes couvrant cette zone.

Dans chaque paire d'antennes fixes, une antenne est utilisée pour les signaux venant du véhicule, encore appelés signaux montants, l'autre pour les signaux destinés au véhicule et encore appelés signaux descendants.

Quand le véhicule suit la piste de guidage optique tracée dans la zone géographique d'influence $Z_1$, ce sont les antennes fixes 332 et 333 qui sont en fonctionnement. Mais dès que le véhicule se présente à la limite $L_{1.2}$ pour pénétrer dans la zone géographique d'influence $Z_2$, il y a commutation d'antennes pour mettre en service les antennes 335 et 336.

Toutefois, avant de quitter définitivement une zone géographique d'influence, le véhicule télécommandé marque un arrêt pour s'assurer du bon fonctionnement des antennes de la zone géographique d'influence dans laquelle il va pénétrer.

La présence d'obstacles temporaires peut modifier la distribution des zones géographiques d'influence et rendre précaire la communication des informations par les antennes normalement en service dans la zone géographique d'influence considérée.

Pour remédier à cet inconvénient, l'installation de communication d'informations par voie hertzienne est complétée par un dispositif sélectionnant la paire d'antennes en fonctionnement par contrôle de gain.

Le dispositif de sélection d'antennes par contrôle de gain risque cependant de perturber les informations transmises par des changements trop fréquents de paires d'antennes. Le défaut est atténué par une hystérèse de niveau qui permet de conserver l'antenne en fonctionnement aussi longtemps que le gain du signal ne tombe pas sous un seuil prédéterminé et par une hystérèse de temps qui retarde la commutation pendant une période de temps déterminée pour éviter qu'une absence de signal extrèmement brève, due, par exemple à une réflexion du signal sur un écran biologique ou tout autre obstacle, commande une commutation inadéquate des antennes.

Le dispositif de sélection d'antennes sera utilisé chaque fois que des obstacles temporaires auront modifié la distribution des zones géographiques dans le mode de déplacement autonome du véhicule télécommandé. Il sera également utilisé chaque fois que le véhicule se déplacera en dehors des pistes de guidage optiques préalablement tracées au sol ou sur les escaliers.

Enfin l'installation de communication comprendra également la possibilité de commuter manuellement les paires d'antennes fixes distribuées dans les bâtiments placés sous la surveillance du véhicule télécommandé.

Un schéma de l'installation de communication des informations par voie hertzienne est représenté en figure 13.

Ce schéma est constitué d'un ensemble de trois distributeurs repérés en 334, 337 et 340 connectés à des paires d'antennes repérées respectivement 332 et 333, 335 et 336, 338 et 339.

Les antennes fixes 332, 335 et 338 sont destinées à transmettre les images vidéo, le son et toutes les autres données relevées par les capteurs et les différents appareils de mesure, vers la salle de contrôle, les antennes fixes 333, 336 et 339 sont destinées à transmettre les consignes de commande du véhicule.

Les distributeurs 334, 337 et 340 sont reliés d'une part à une unité de selection d'antennes 341 et d'autre part à une unité de décision 342 elle-même commandée directement par la salle de contrôle ou par une unité de contrôle 343.

Le schéma de cette installation de communication des informations par voie hertzienne se complète par des connexions reliant l'unité de sélection d'antenne 341 respectivement à l'unité de décision 342 et à l'unité de contrôle 343. En revenant à la figure 12 on remarquera que les antennes sont situées à l'intérieur de l'enceinte de sécurité 320 tandis que les distributeurs y raccordés sont situés à l'extérieur de cette enceinte de manière à augmenter la rapidité de la commodité d'intervention en cas de panne d'un des distributeurs.

Dans le schéma de la figure 13 donné à titre d'exemple de réalisation une des fonctions de chaque distributeur est d'insérer, sur une ligne le reliant à l'unité de sélection d'antenne 341, les signaux en provenance du véhicule et les signaux en provenance de la salle de contrôle. Une seconde fonction est d'amplifier les signaux émis par le véhicule en les restituant vers la salle de contrôle avec une correction automatique de gain pour compenser leurs variations suite au déplacement du véhicule parmi les différents écrans biologiques.

Puisque la valeur de gain apporté par chaque distributeur permet de mesurer la qualité de la réception des signaux émis par le véhicule il suffit d'appliquer, au câble reliant chaque distributeur à l'unité de décision 342, une tension continue proportionelle à la valeur du gain pour connaître à chaque instant la paire d'antennes captant le mieux les signaux émis par le véhicule.

L'unité de décision 342 dispose de trois stratégies différentes pour commander le fonctionnement de l'unité de sélection d'antennes 341 dont l'unique rôle est de commuter le distributeur désigné pour mettre en fonctionnement la paire d'antennes la mieux adaptée.

Les stratégies dont dispose l'unité de décision 342 seront détaillées ultérieurement.

L'unité de contrôle 343 recevant les signaux émis par le véhicule, via l'antenne fixe en fonctionnement, le distributeur y raccordé et, comme représenté en figure 13, via l'unité de sélection d'antennes 341, fournit d'une part les images vidéo et le son à un appareil de surveillance situé dans la salle de contrôle et d'autre part sur un moniteur graphique les grandeurs mesurées par les capteurs pour un affichage permanent et comparaison avec des niveaux prédéterminés, les positions angulaires des châssis auxiliaires 3 et 4 et des manipulateurs 200' et 200 par rapport au châssis principal 2 et les autres paramètres utiles à la conduite du véhicule, tel que l'état de charge des batteries. L'unité de contrôle 343 mentionne à l'unité de décision 342 le changement de zones du véhicule. Le rôle de l'unité de contrôle 343 est donc de recevoir tous les signaux venant du véhicule, de les interpréter et de les aiguiller vers leurs destinataires finals.

Comme indiqué précédemment, l'unité de décision 342 dispose de trois stratégies différentes pour mettre en fonctionnement la paire d'antennes la plus performante.

Une première stratégie consiste en une commande manuelle faite depuis la salle de contrôle pour commuter à l'aide de l'unité de sélection d'antennes 341 le distributeur choisi par l'opérateur.

Une seconde stratégie consiste à mettre en fonctionnement les antennes fixes distribuées par zone géographique d'influence selon la position du véhicule. Cette stratégie est surtout utilisée lorsque le véhicule se déplace en mode autonome en suivant la piste optique de guidage tracée dans la zone géographique d'influence considérée.

Si par exemple, le véhicule est sur le point de quitter la zone géographique d'influence $Z_1$ pour pénétrer dans la zone géographique d'influence $Z_2$, des signaux optiques disposés sur la piste de guidage optique sont transformés à bord du véhicule et émis par une de ses antennes pour être capté par l'antenne fixe 332 amplifié par le distributeur 334 et transmis via l'unité

0197020

de sélection 341 à l'unité de contrôle 343 qui va engager le test de vérification des antennes fixes 335 et 336 et du distributeur 337 y raccordé. Ce test de vérification se fera via l'unité de décision 342 et l'unité de sélection d'antennes 341. Si la nouvelle paire d'antennes fixes 335 et 336 ainsi que le distributeur 337 y raccordé fonctionnent normalement, le véhicule est libre de poursuivre sa voie en suivant la piste de guidage optique. Si au contraire la nouvelle paire d'antennes fixes est déficiente le véhicule reçoit l'ordre de s'arrêter avant de sortir de la zone géographique d'influence $Z_1$ ou de son recouvrement avec la $Z_2$.

La troisième stratégie dont dispose l'unité de décision 342 est basée sur l'information envoyée par chaque distributeur concernant la correction de gain apportée aux signaux émis par le véhicule. En comparant les tensions continues fournies par chaque distributeur l'unité de décision 342 a une image de la qualité de réception de chaque paires d'antennes et choisit la paire d'antennes qui reçoit le meilleur signal. Comme mentionné précédemment, les commutations intempestives opérées par l'unité de sélection d'antennes 342 sont évitées en fixant une hystérèse de niveau et une hystérèse de temps selon un seuil et une période prédéterminés.

Cette dernière stratégie est utilisée principalement lorsque le véhicule circule en dehors des pistes de guidage optique.

Le choix de ces stratégies s'opère depuis la salle de contrôle en agissant directement sur l'unité de décision 342.

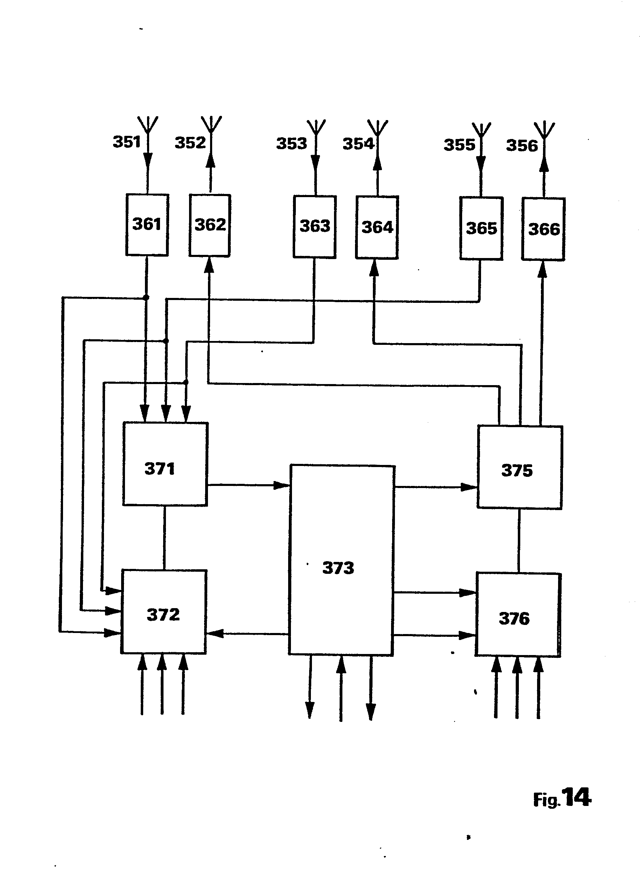

La figure 14 montre un autre exemple du schéma de l'installation de transmission des informations par voie hertzienne.

Comme dans l'exemple montré en figure 13, l'installation reprise à la figure 14 est constituée d'antennes repérées en 351, 353, 355 servant au signal montant, d'est-à-dire à la transmission d'information venant du véhicule et destinées à la salle de contrôle et d'autres antennes repérées en 352, 354n 356 servant au signal descendant c'est-à-dire à la transmission d'informations venant de la salle de contrôle et destinées au véhicule.

Les antennes sont raccordées à des distributeurs respectivement repérés en 361, 362, 363, 364, 365, 366 pour couvrir les zones géographiques d'influence par paires.

Les signaux montants transitent par une unité de sélection 371 pour être analysés dans une unité de contrôle 373 qui distribue les informations provenant des signaux montants soit vers la salle de contrôle pour afficher les informations en provenance des différents capteurs et des divers appareils de mesure, soit vers une unité de décision 372 pour signaler le changement de zone du véhicule, soit encore vers une autre unité de décision 376 affectée aux signaux descendants pour l'informer de la qualité de réception des antennes placées sur le véhicule de manière à choisir éventuellement une autre antenne émettant vers le véhicule pour améliorer la qualité de réception.

Le mode de stratégie à utiliser pour les signaux descendants est fourni à une unité de décision 376 soit directement en provenance de la salle de contrôle, soit par l'unité de contrôle 373 après analyse des signaux montants pour transmettre les informations relatives aux changements de zones du véhicule et à la qualité de réception des antennes du véhicule.

Les informations fournies à l'unité de décision 376 sont transmises à l'unité de sélection 375 qui reçoit par ailleurs les messages destinés au véhicule provenant de la salle de contrôle et traités par l'unité de contrôle 373.

Les informations recueillies par l'unité de sélection 375 sont ensuite transmises au véhicule par le distributeur sélectionné et l'antenne qui lui est connectée.

0197020

Le ·schéma de la figure 14 permet une plus grande souplesse de sélection.

Par exemple il est possible de sélectionner l'antenne 351, affectée normalement à la·zone $Z_1$, pour capter les informations en provenance du véhicule, et l'antenne 354, affectée normalement à la zone $Z_2$ pour émettre vers le véhicule.

L'installation de communication d'informations par voie hertzienne représente en figure 13 est un exemple de réalisation destiné à la surveillance d'un étage d'une enceinte de sécurité en 320 sur la figure 12.

Dans cet exemple on suppose que tout cet étage est entièrement contrôlé par les trois distributeurs 334, 337 et 340. Il est évident qu'un autre exemple de réalisation peut dans le cadre de cette invention comporter un plus grand nombre de distributeurs affectés par exemple à la surveillance de plusieurs étages d'une même enceinte de sécurité.

Dans un autre exemple de réalisation, non représenté comportant une seule paire d'antennes et un seul distributeur, tels que repérés en 332, 333 et 334, en figure 13 le distributeur 334 est connecté à la fois à l'unité de décision 342 et à l'unité de contrôle 343 sans passer par l'intermédiaire de l'unité de sélection 341 devenue inutile.

Parmi les signaux émis par le véhicule et reçus à la salle de contrôle sur un moniteur graphique, il a été fait mention précédemment de la position angulaire des châssis auxiliaires 3 et 4 et des manipulateurs 200' et 200 par rapport au châssis principal 2.

Ces valeurs angulaires sont obtenus à l'aide de quatre potentiomètres comparable au dispositif de mesure d'inclinaison 295 décrit à la figure 10.

Pour mesurer les inclinaisons des châssis auxiliaires 3 et 4 par rapport au châssis principal 2 on utilise deux potentiomètres l'un affecté au châssis auxiliaire arrière 4. Chaque potentiomètre comporte un curseur solidaire du châssis auxiliaire et une bobine solidaire du châssis principal 2.

Pour mesurer la position angulaire des manipulations 200' et 200 par rapport au châssis principal deux autres potentiomètres sont utilisés, l'un pour le manipulateur gauche 200', l'autre pour le manipulateur droit 200.

Par exemple, pour mesurer la position angulaire du manipulateur gauche 200', le potentiomètre utilisé comporte un curseur solidaire de l'arbre 258, du mécanisme de repli-déploiement 250 décrit à la figure 9, et une bobine solidaire du montant avant 252 de ce même mécanisme. Pour la mesure de l'inclinaison du manipulateur droit 200 une disposition analogue est adaptée sur l'arbre solidaire de la plaque d'appui 262.

Il est à remarquer que pour obtenir la mesure de la position angulaire des manipulateurs 200' et 200 un seul potentiomètre affecté à l'un ou l'autre manipulateur suffit puisque la rotation des plaques d'appui 259 et 262 est simultanée et symétrique.

Dans un autre exemple de réalisation du potentiomètre, il est évident que les éléments constitutifs peuvent être inversés; à savoir que la bobine soit solidaire du châssis principal 2 et que le curseur soit solidaire de l'élément dont on veut connaître la position angulaire par rapport au châssis principal 2.

Il est bien évident que le mémoire descriptif ne décrit que des exemples d'exécution donnés à titre purement non limitatif et que de nombreuses variantes sont également couvertes par la présente invention dans la mesure où elles sont comprises dans le cadre des revendications qui suivent. Ainsi, les freins utilisés dans les groupes moteur-réducteur-frein sont avantageusement des freins électromagnétiques à manque de courant qui contribuent à réduire la consommation d'énergie et à accroître la sécurité de fonctionnement.

Les calculs et dimensionnements des divers éléments et notamment des moyens de commande électroniques sont évidemment effectués selon la pratique habituelle avec une réserve de puissance suffisante notamment pour des raisons de sécurité.

De manière analogue, les chenilles utilisées sont des chenilles classiques et on veillera évidemment à réduire au maximum les pertes de puissance par frottement.

On peut également noter que les matériaux utilisés pour la construction du véhicule télécommandé selon la présente invention sont choisis de manière à obtenir un gain de poids maximum tout en assurant une résistance maximale au divers efforts.

0197020

REVENDICATIONS

1. Véhicule télécommandé par câble ou par voie hertzienne comportant, en plus des moyens d'alimentation, de commande électrique et/ou électronique, de mesure et de manipulation diverses, au moins un châssis principal (2) équipé d'une paire de chenilles (5,5') tournant chacune sur au moins deux barbotins (6,7 et 6',7'), caractérisé en ce que le châssis principal (2) constitué par deux longérons parallèles (9,9') maintenus à distance par des éléments d'entretoisement (10,10', 11,11') est munis d'au moins deux paires de barbotins (6,6' et 7,7') reliés entre eux par un essieu creux (15,17), qui comportent de manière intégrée dans chaque fois l'un des deux barbotins formant une paire (6',7) et ce dans des barbotins correspondant à des côtés opposés, un moteur, un réducteur et un frein (13,15) et en ce que ledit châssis principal (2) est équipé d'un dispositif de mesure d'inclinaison (280) du châssis principal par rapport à la direction horizontale.

2. Véhicule télécommandé selon la revendication 1 caractérisé en ce que le châssis principal (2) est équipé d'au moins un châssis auxiliaire, de préférence deux châssis auxiliaires (3,4), monté à l'avant et à l'arrière du châssis principal (2), en ce que chaque châssis auxiliaire (3,4) est également monté sur chenilles (23,23' et 29,29'), une des paires de barbotins (6,6' et 7,7') permettant la rotation des chenilles du ou des châssis auxiliaires (3,4) étant montée de manière co-axiale avec l'une des paires de barbotins du châssis principal (2) et en ce que l'une des paires de barbotins d'un châssis auxiliaire comporte, de manière intégrée dans l'un des deux barbotins formant ladite paire de barbotins, au moins un moteur et un réducteur et en ce que le véhicule comporte un dispositif de mesure de la position relative du châssis auxiliaire correspondant, par rapport au châssis principal.

16.20/1969

3. Véhicule télécommandé selon la revendication 2 caractérisé en ce que le véhicule télécommandé est muni d'au moins un dispositif de mesure de la position angulaire du châssis auxiliaire par rapport au châssis principal, qui consiste en deux potentiomètres consitués chacun d'une bobine (297) et d'un curseur (296), solidarisés l'un au châssis principal (2) et l'autre à l'élément dont on veut relever la position angulaire par rapport au châssis principal (2).

4. Véhicule télécommandé selon l'une quelconque des revendications précédentes caractérisé en ce que le dispositif de mesure d'inclinaison du châssis principal par rapport à la direction horizontale (295) consiste en un potentiomètre composé d'un curseur (296) solidaire d'un axe (287) solidaire du châssis principal (2) et d'une bobine (297) solidaire d'un support (280) suspendu de manière pendulée.

5. Véhicule télécommandé selon la revendication 1 caractérisé en ce qu'il est guidé par un opérateur, à l'appui d'au moins une caméra orientable montée sur ledit véhicule et un écran de visualisation ainsi que d'un afficheur donnant une vue synoptique de profil du véhicule qui permet d'apprécier sa position par rapport à l'horizontale, ainsi que les positions angulaires des châssis auxiliaires.

6. Véhicule télécommandé selon la revendication 1 caractérisé en ce qu'il est guidé par une trace de guidage, moyennant une tête de guidage optique (280) qui est constituée d'un fond (281) au centre duquel est disposée une ampoule (290) dont le faisceau lumineux est canalisé par deux visières (293,294), deux senseurs (291,292) étant symétriquement disposés de part et d'autre de la dite ampoule (290), et dont l'écartement correspond dans sa version préférée à la largeur de la bande centrale de la piste optique de guidage, et de deux flancs (282,283) dans la partie supérieure desquels sont insérés deux roulements à billes (284,285) destinés à recevoir deux arbres (286,287) fixés à deux montants (288,289) d'un étrier solidarisé au châssis principal (2), ladite tête de guidage comportant un dispositif d'amortissement (299).

7. Véhicule télécommandé selon la revendication 1 caractérisé en ce qu'il est commandé par voie hertzienne à l'aide d'une unité de contrôle et d'une installation de transmission des informations par voie hertzienne qui comprend une unité de contrôle (334) connectée d'une part à une unité de décision (342) et d'autre part à une unité de sélection d'antennes (341), ladite unité de décision (342) et ladite unité de sélection d'antennes (341) étant connectées entre elles et connectée chacune à des distributeurs (334,337,340) raccordés chacun à une paire d'antennes fixe (332,333;335,336;338,339) répartie dans le volume à surveiller, une antenne (332,335,338) de chaque paire étant destinée à recevoir des images vidéo et les informations relevées par les capteurs (291,292) et les appareils de mesure (295) embarqués sur le véhicule, l'autre antenne (333,336,339) étant destinée à transmettre au véhicule les ordres venant d'une salle de contrôle;

en ce que l'unité de contrôle (343) reçoit des ordres de la salle de contrôle et fournit à celle-ci des images vidéo et des informations émises par le véhicule, transmet des ordres à l'unité de décision (342) et à l'unité de sélection (341), reçoit des signaux de mesure et des signaux vidéo en provenance des distributeurs (334,337,340) en transitant par l'unité de sélection d'antennes (341) et reçoit de l'unité de sélection d'antennes (341) la confirmation de la commutation d'antenne demandée;

en ce que l'unité de décision (342) reçoit les ordres de la salle de contrôle concernant la stratégie à appliquer pour la conduite du véhicule, soit manuellement lorsque l'opérateur choisit la sélection des antennes fixes (332,333;335,336;338,339), soit en mode de conduite au-

tonome du véhicule, lorsque la stratégie choisie est basée sur la lecture des pistes optiques de guidage avec une commutation des antennes fixes (332,333;335,336) par zone géographique d'influence ($Z_1$,$Z_2$), soit encore en commutation automatique des antennes fixes (332,333;335,336;338,339) lorsque la conduite du véhicule est basée sur le contrôle du gain d'amplification pour définir la meilleure qualité de réception, la commutation automatique étant temporisée par une hystérèse de niveau et une hystérèse de temps, reçoit des signaux en provenance des distributeurs (334,337,340) lui permettant de comparer la qualité de réception, de chacun d'eux pour choisir les antennes fixes à commuter lorsque la stratégie de commutation par contrôle de gain d'amplification est appliquée, transmet l'ordre de commutation à l'unité de sélection d'antennes (341);

en ce que l'unité de sélection d'antennes (341) reçoit l'ordre de commutation de l'unité de décision (342), commute les antennes fixes connectées par paire aux distributeurs (334,337,340) et confirme l'accomplissement de la commutation à l'unité de contrôle (343) et transmet les ordres destinés au véhicule au distributeur le mieux adapté;

en ce que chaque distributeur (334), amplifie les signaux en provenance du véhicule avec un gain variable, définit la qualité de réception, par une tension continue proportionnelle au gain d'amplification et fournit cette information à l'unité de décision (342);

transmet les informations, en provenance du véhicule par l'intermédiaire de l'antenne fixe (332), vers l'unité de contrôle (243) avec transit par l'unité de sélection d'antennes (341), transmet au véhicule, par l'intermédiaire de l'antenne fixe (333), les ordres transités par l'unité de sélection d'antennes (341).

8. Véhicule télécommandé selon la revendication 1 caractérisé en ce qu'il est commandé par voie hertzienne à l'aide d'une unité de contrôle et d'une installation de transmission des informations par voie hertzienne qui est composée de deux branches, l'une affectée aux signaux en provenance du véhicule et destinés à la salle de contrôle, appelés signaux montants, l'autre branche affectée aux signaux destinés au véhicule, appelés signaux descendants, ces deux branches aboutissant à une unité de contrôle (373) qui reçoit les ordres de la salle de contrôle et lui fournir en permanence les informations en provenance du véhicule;

en ce que la branche affectée aux signaux montants comprend une série d'antennes (351,353,355), pour capter les signaux montants, reparties dans le volume à surveiller, en connexion chacune avec un distributeur (361,363,365) qui, d'une part, amplifie les signaux avec un gain variable avant de les transmettre à l'unité de contrôle (373) en transitant par une unité de sélection d'antennes (371) et d'autre part, délivre une tension continue, proportionelle au gain d'amplification, à une unité de décision (372) qui reçoit, de la salle de contrôle, les ordres concernant la stratégie à appliquer pour la conduite du véhicule et qui reçoît de l'unité de contrôle (373), les informations à transmettre à l'unité de sélection d'antennes (371) lorsque le véhicule change de zones gégraphiques d'influence,

en ce que la branche affectée aux signaux descendants comprend une unité de décision (376) qui reçoit, de la salle de contrôle, les ordres concernant la stratégie à appliquer pour la conduite du véhicule et qui reçoit, de l'unité de contrôle les informations relatives aux changements de zone du véhicule et à la qualité de réception des antennes du véhicule, la dite unité de sélection d'antennes (375) sélectionne le distributeur (362,364,366) le mieux adapté selon les informations reçues sur la qualité de réception des antennes du véhicule et tranmet, par l'intermédiaire de ce distributeur et de l'antenne lui connectée les ordres destinés au véhicule.

9. Véhicule télécommandé selon la revendication 2 caractérisé en ce qu'il est équipé d'un manipulateur double (200',200) muni d'un mouvement d'articulation obtenu par un dispositif de repli-déploiement (250) comprenant un arbre de commande (266) mis en mouvement de rotation par un pignon (267) fixé à une extrémité et actionnant une vis à billes (264) collaborant avec une double crémaillère (254) engrenant avec un double train d'engrenage formé chacun d'une première roue dentée (255 ou 260) et d'une seconde roue à denture partielle (256) solidarisée à une plaque d'appui (259 ou 262) sur laquelle s'attache les manipulateurs (200,200').

10. Véhicule télécommandé selon l'une quelconque des revendications 1 à 4 caractérisé en ce qu'il est équipé d'un bras articulé à au moins deux articulations, qui comporte de manière intégrée, le moteur d'entraînement, le réducteur et éventuellement un frein et en ce que l'avant bras est coudé.

Fig. 1

0197020

Fig. 2

Fig.3

Fig.4

0197020

Fig.5

Fig.6

0197020

Fig.7

6/10

5197020

Fig.8

Fig.9

Fig.10

Fig. 11

Fig.**12**

Fig.**13**

351  352     353  354     355  356

361  362     363  364     365  366

371          375

373

372          376

Fig.**14**

**Office européen
des brevets**

**RAPPORT DE RECHERCHE EUROPEENNE**

**5197020**

Numero de la demande

EP 86 87 0029

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | REMOTE SENSING TECHNOLOGY, PROCEEDINGS 32nd Conference on remote systems technology, vol. 1, 1984, pages 29-33, Illinois, US; R.J. STOUKY et al.: "Marcher - a robot whose time has come?" \* En entier \* | 1 | G 21 C    17/00 B 25 J    5/00 |
| A,D | REMOTE SENSNG TECHNOLOGY, PROCEEDINGS 32nd CONFERENCE ON REMOTE SYSTEMS TECHNOLOGY, vol. 2, 1984, pages 11-18, Illinois, US; C.R. FLATAU et al.: "Remote vehicle for hostile environments" \* Pages 12-15; figures 1-4 \* | 1 | |
| A,D | KERNTECHNIK, ABTEILUNG REAKTORBETRIEB UND TECHNIK, GESELLSCHAFT FÜR KERNFORSCHUNG mbH, vol. 17, no. 12, 1975, pages 527-532, Karlsruhe, DE; G.W. KÖHLER et al.: "Manipultorfahrzeug-System MF2 und seine Verwendungsmöglichkeiten" \* En entier \* | 1 | **DOMAINES TECHNIQUES RECHERCHES (Int Cl 4)**<br><br>G 21 C    17/00 B 25 J    5/00 |

---     -/-

Le présent rapport de recherche a été établi pour toutes les revendications

| Lieu de la recherche | Date d'achèvement de la recherche | Examinateur |
|---|---|---|
| LA HAYE | 16-06-1986 | ERRANI C. |

**RAPPORT DE RECHERCHE EUROPEENNE**

Office européen
des brevets

ß197020

Numéro de la demande

EP 86 87 0029

## DOCUMENTS CONSIDERES COMME PERTINENTS

Page 2

| Catégorie | Citation du document avec indication. en cas de besoin. des parties pertinentes | Revendication concernée | CLASSEMENT DE LA DEMANDE (Int Cl 4) |
|---|---|---|---|
| A | KERNTECHNIK, ABTEILUNG REAKTORBETRIEB UND TECHNIK, GESELLSCHAFT FÜR KERNFORSCHUNG mbH, vol. 19, no. 12, décembre 1977, pages 541-548, Karlsruhe, DE; G.W. KÖHLER: "Ferngelenktes Manipulator-Fahrzeug MF3" * Pages 541-542; figure 1 * | 1 | |
| A | L'AERONAUTIQUE ET L'ASTRONAUTIQUE, no. 21, mai 1970, pages 47-54, Paris, FR; GAUDEAU et al.: "Projet d'envoi sur la lune d'un véhicule d'exploration à chenilles télécommandé" * Figures 2,13 * | 1 | |
| A | FR-A-2 190 087 (GESELLSCHAFT FÜR KERNFORSCHUNG) * Revendications; figure 1 * | 1 | DOMAINES TECHNIQUES RECHERCHES (Int. Cl.4) |
| A | MINI-MICRO SYSTEMS, no. 14, décembre 1983, pages 122-124, 128,130, Denver, Colorado, US; J.K. CORRADO: "Military-industrial cooperation advances robotics applications" | | |

Le présent rapport de recherche a été établi pour toutes les revendications

| Lieu de la recherche | Date d'achèvement de la recherche | Examinateur |
|---|---|---|
| LA HAYE | 16-06-1986 | ERRANI C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur. mais publié à la date de dépôt ou apres cette date
D : cité dans la demande
L : cité pour d'autres raisons

& : membre de la même famille. document correspondant

OEB Form 1503 03 82